# EUROPEAN PATENT APPLICATION

(11) **EP 1 894 694 A2**
(43) Date of publication of application: **05.03.2008**
(21) Application number: 07016179.9
(22) Date of filing: 17.08.2007
(51) Int. Cl.: B29C 33/44, B29C 33/38, B29C 37/00, B29C 45/14, B29C 45/44, B29C 33/42, B29C 45/37

(54) **Manufacturing method for resin molded product**

(30) Priority: 04.09.2006 JP 2006238639; 22.11.2006 JP 2006315119; 28.05.2007 JP 2007140777
(71) Applicant: Mitsubishi Cable Industries, Ltd., Chiyoda-ku Tokyo (JP)
(72) Inventor: Yamamoto, Akihiro, Arida-shi, Wakayama (JP)
(74) Representative: HOFFMANN EITLE

(57) **Abstract**

A cavity (2) is formed with a convex pattern (X) uniformly formed by electric casting on an inner peripheral face of a mold main body (6) of an undivided and seamless configuration having a circular through hole (7). Next, a core (12) is inserted to the cavity (2). Then, molten resin (3) is injected into the cavity (2), a resin molded product (44) having a concave pattern (Y) on the surface and the core (12) in the center is molded, and the resin molded product (44) is departed from the inner face (10) of the cavity (2) by reduction of outer diameter dimension (φd) with cooling shrinkage of the molten resin (3). And, the resin molded product (44) is drawn out of the cavity (2).

## Description

This invention relates to a manufacturing method for resin molded product.

A measuring roller is to supply a predetermined amount of ink (liquid or powder for development) to a developing roller of an electrostatic printing machine, and a fine concave pattern to contain the ink is formed on a peripheral face of the measuring roller.

Conventionally, the measuring roller is made of metal or ceramic, and the concave pattern on the surface is formed by mechanical cutting work or laser machining (refer to Japanese Provisional Publication No. 2006-75854, for example). And, the concave pattern may be formed by electric discharge machining (refer to Japanese Provisional Publication No. H7-24652, for example). And, the measuring roller is semi-eternally used without replacement.

Recently, the printing machine has been used with frequent change of color, and it is laborsome to wash the measuring roller in every color change. So it is considered that the measuring roller is prepared for each color and the color change is conducted by easy replacement of the measuring roller.

However, the manufacturing method to form the concave pattern by the above-mentioned mechanical cutting or laser machining is not appropriate for mass production because of high cost and low reproductivity of the concave pattern. And, although it is preferable to make measuring rollers of resin by injection molding for the mass production, the concave pattern can not be made with high accuracy because of a parting line of mold generated on the surface of the measuring roller.

And, in case that the mold has seamless undivided configuration as not to generate the parting line, it is extremely difficult to form fine concavo-convex pattern (to transfer the concave pattern onto the surface of the roller) by the mechanical cutting or laser machining. And, the electric discharge machining of the above-mentioned Japanese Provisional Publication No. H7-24652 can make only undivided molds of length less than 100mm. Further, it is also difficult to economically make plate cylinders other than the above-mentioned measuring roller by conventional manufacturing methods.

It is therefore an object of the present invention to provide a manufacturing method for resin molded product having a highly accurate concave pattern on the surface.

This object is solved according to the present invention by manufacturing method for resin molded product including the features of claim 1. Furthermore detailed embodiments are described in dependent claims 2, 3, 4, 5, 6, 7, 8, and 9.

The present invention will be described with reference to the accompanying drawings, in which:
Figure 1 is a cross-sectional view showing an embodiment of a manufacturing apparatus used in a manufacturing method for resin molded product of the present invention;
Figure 2 is a perspective view of a mold;
Figure 3 is an enlarged cross-sectional view of the mold;
Figure 4 is an explanatory cross-sectional view of the manufacturing method for resin molded product of the present invention;
Figure 5 is an explanatory enlarged lateral cross-sectional view;
Figure 6 is an explanatory enlarged longitudinal cross-sectional view;
Figure 7 is an explanatory cross-sectional view;
Figure 8 is an explanatory cross-sectional view;
Figure 9 is an explanatory cross-sectional view;
Figure 10 is an explanatory cross-sectional view;
Figure 11 is an enlarged front view of a principal portion of resin molded product (measuring roller);
Figure 12A is an enlarged cross-sectional view showing an embodiment of a concave pattern;
Figure 12B is an enlarged cross-sectional view showing another embodiment of the concave pattern;
Figure 13A is an enlarged front view showing another embodiment of the concave pattern;
Figure 13B is an enlarged front view showing still another embodiment of the concave pattern;
Figure 14 is an enlarged front view of a master;
Figure 15 is an explanatory perspective view showing manufacturing method of the mold;
Figure 16 is an explanatory cross-sectional view;
Figure 17 is an explanatory enlarged cross-sectional view;
Figure 18 is an explanatory enlarged cross-sectional view;
Figure 19 is an explanatory enlarged cross-sectional view;
Figure 20A is an enlarged front view of a principal portion of another embodiment of the resin molded product;
Figure 20B is an enlarged front view of a principal portion of another embodiment of the resin molded product;
Figure 21A is an enlarged front view of a principal portion of still another embodiment of the resin molded product;
Figure 21B is an enlarged front view of a principal portion of still another embodiment of the resin molded product;
Figures 22A through 22E are enlarged front views showing various modifications of the concave pattern; and
Figures 23A and 23B are explanatory views of drawing in the manufacturing method for resin molded product relating to the present invention.

Preferred embodiments of the present invention will now be described with reference to the accompanying drawings.

The present invention is a manufacturing method of a cylindrical resin molded product, for example, a measuring roller to measure liquid or powder ink used in an electrostatic printing machine, and a plate cylinder used for flexography (letterpress printing), gravure printing (recessed plate printing), and offset printing (planography).

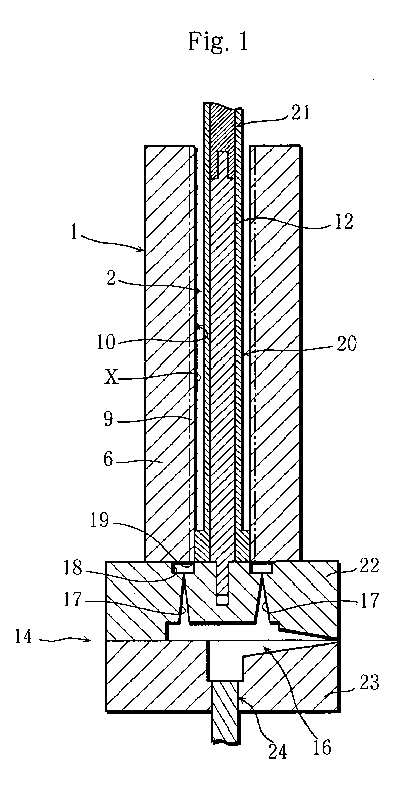

Figure 1 shows an embodiment of a manufacturing apparatus used in the manufacturing method of the present invention. This apparatus is provided with a mold 1 for injection molding and a molten resin supplying duct main body 14 having an upper main body 22 and a lower main body 23 freely dividable each other.

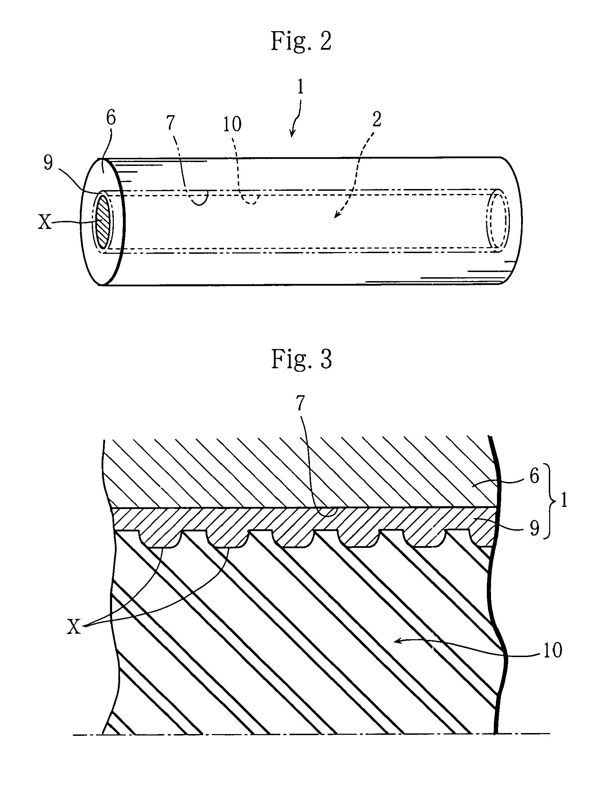

In Figure 2 and Figure 3, the mold 1 has a mold main body 6 of seamless and undivided configuration having a circular through hole 7, and a convex pattern X is uniformly formed on the entire inner-peripheral surface of the mold main body 6 by electric casting. In detail, the mold 1 is composed of the mold main body 6 and a plated layer 9 formed on the inner peripheral face of the mold main body 6, and the plated layer 9 has a fine convex pattern of plural ridges. And, a cavity 2 is formed with an inner face 10 of the mold 1 on which the convex pattern X is formed.

And, in Figure 1, outer peripheral sides of border lines, shown with two-dot broken lines in the mold 1, show the mold main body 6, and inner peripheral sides of the border lines show the plated layer 9 having the convex pattern X.

To describe the molten resin supplying duct main body 14 in Figure 1, the molten resin supplying duct main body 14 is provided with a supplying duct 16 to supply molten resin to the mold 1, and, the supplying duct 16 has plural spools 17, a resin well of enlarged hollow ring, and a film gate 19 communicatively connected to the cavity 2 of the mold 1 in the state shown in Figure 1.

A mark 20 represents a resistance-adding means, freely moved in vertical direction by an actuator such as a piston, to give the molten resin injected into the cavity 2 resistance to eliminate dispersion in flowing speed and regulate a core 12. A mark 21 represents a supporting arm to support an upper end of the core 12.

In Figure 1 through Figure 5, a manufacturing method of a resin roller 4 as a resin molded product 44 composed of a measuring roller is described.

As shown in Figure 1, the mold 1 is placed on the molten resin supplying duct main body 14 in vertical direction. And, the resistance-adding means 20 is inserted until a lower end portion of the cavity 2. And, the core 12 is inserted to the cavity 2, the lower end of the core 12 is inserted to a hole portion on the upper face of the molten resin supplying duct main body 14, and the upper end of the core 12 is supported by the supporting arm 21.

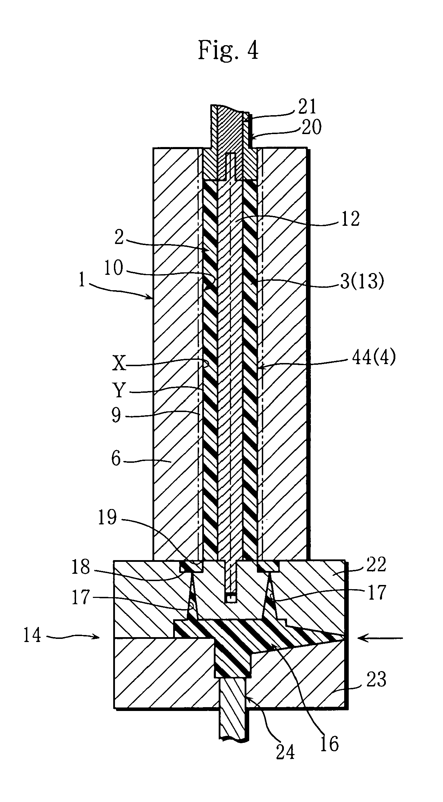

Next, in Figure 4, molten resin 3 is supplied to the supplying duct 16 by an injection nozzle not shown in Figures. The molten resin 3 through the spools 17 once filling the resin well 18 is injected to the cavity 2 through the film gate 19. As the cavity 2 is filled with the molten resin by the resistance-adding means 20 ascended by movement of the piston, the resin roller 4 having a (molten) resin layer 13 is formed around the core 12 in the center.

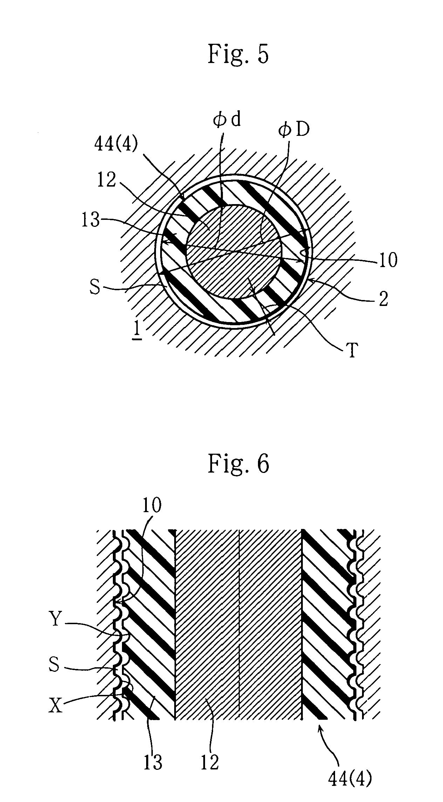

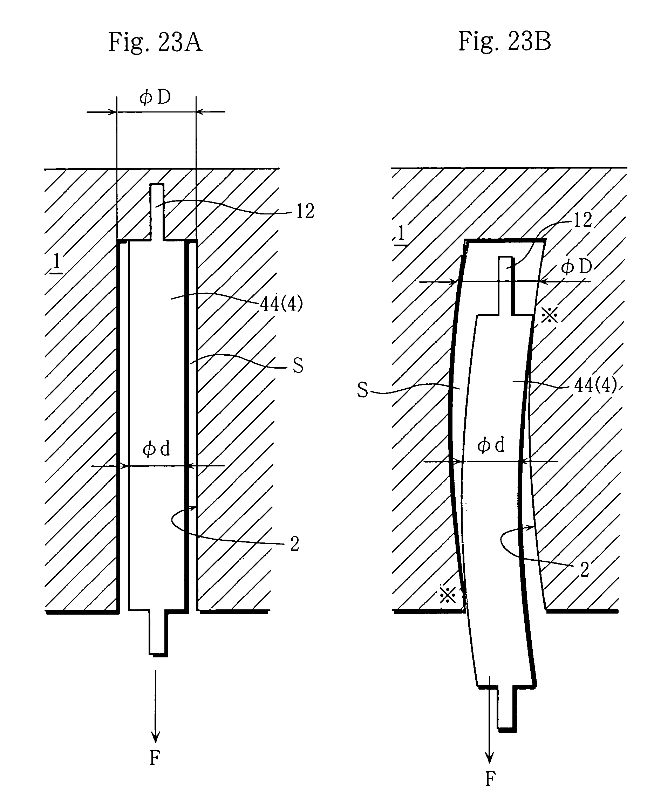

Then, as shown in Figure 5, or Figures 23A and 23B, when the (molten) resin layer 13 is cooled, a thickness dimension T is reduced and an outer diameter dimension φd of the resin roller 4 (cylindrical resin molded product 44) becomes smaller than an inner diameter dimension φD of the cavity 2. That is to say, the resin roller 4 (the resin molded product 44) is departed from the inner face 10 of the cavity 2 by the reduction of the outer diameter dimension φd of the resin roller 4 (the resin molded product 44) with cooling shrinkage of the molten resin 3 (the resin layer 13). A concave pattern Y, transferred from the convex pattern X, is formed on the surface of the resin roller 4 (the resin layer 13) departed from the inner face 10 as shown in Figure 6. Figure 5 and Figure 6 show the resin layer 13 after completely cooled and solidified.

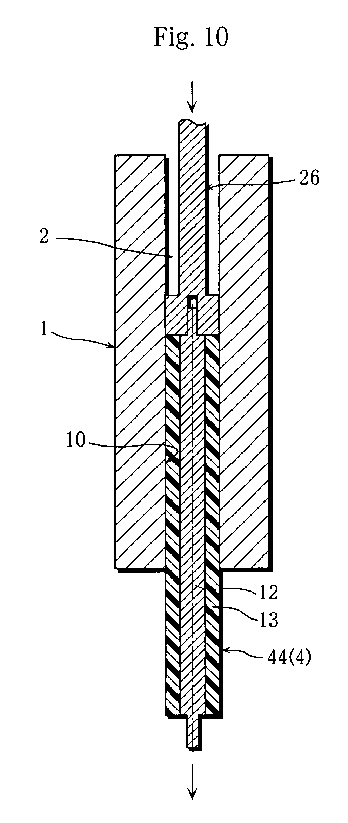

And, as shown in Figure 10, the resin roller 4 (the resin molded product 44) is drawn out (or pushed out) of the mold 1 to make a measuring roller having the concave pattern Y on the surface.

Returning to Figure 5, the thickness dimension T of the resin layer 13 just after the molten resin 3 is filled into the cavity 2 (the thickness dimension T of the resin layer 13 just after the filling and in molten state) is preferably formed to be 1.5mm to 2.5mm. When the thickness dimension T just after the filling and in molten state is less than 1.5mm, sufficient gap S is not generated between the inner face 10 and the outer face of the resin layer 13 (refer to Figure 6) because of small amount of cooling shrinkage, the resin roller 4 (the resin molded product 44) is hardly drawn out of the mold 1 or the concave pattern Y may be damaged when drawn out. When the thickness dimension T just after the filling and in molten state is more than 2.5mm, circularity (of lateral cross section) of the resin roller 4 (the resin molded product 44) can not be secured.

In considering the thickness dimension T of the resin layer 13, concaves and convexes of the concave pattern Y is not taken into account because the concave pattern Y, for example, is formed with micro concave grooves of which depth is 10 µm.

Figure 23A shows ideal configurations of the cavity 2 and the resin molded product 44 (the roller 4), and Figure 23B shows actual dimensions of the cavity 2 and the resin molded product 44 (the roller 4) with exaggeration. "Ideal" means that circularity of the cavity 2 of the mold 1 is 0, and circularity of the molded product 44 (the roller 4) is also 0. In this ideal case, φD - φd ≧ 0.02mm. Therefore, the resin molded product 44 (the roller 4) after cooled and solidified can be drawn out downward (as shown with an arrow F) with the gap (clearance) S of 0.01mm.

Actually, however, as shown in Figure 23B, the circularity of the cavity 2 of the mold 1 is about 0.02mm to 0.03mm, and the circularity (of the outer diameter) of the resin molded product 44 (the roller 4) is also about 0.02mm to 0.03mm. Therefore, to draw the resin molded product 44 (the roller 4) in the direction of the arrow F without stress, φD - φd ≧ 0.1mm and the gap (clearance) S is set to be equal to or more than 0.05mm.

More preferably, φD - φd ≧ 0.13mm and the gap (clearance) S is set to be equal to or more than 0.065mm.

That is to say, Figure 23B shows (with exaggeration) that the resin molded product 44 (the roller 4) may contact the inner face of the cavity 2 on portions shown with a mark 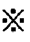 , and flaws are generated by the contact (abrasion) on the portions of the mark 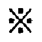 on the surface of the resin molded product 44 (the roller 4).

Although these flaws do not cause problems in a roller of which outer surface is cut, defects in appearance and quality are caused by the flaws in the resin molded product (the roller 4) without outer diameter cutting after the molding. Especially, as the measuring roller 27, quality problem is generated because groove depth of the concave pattern Y is altered.

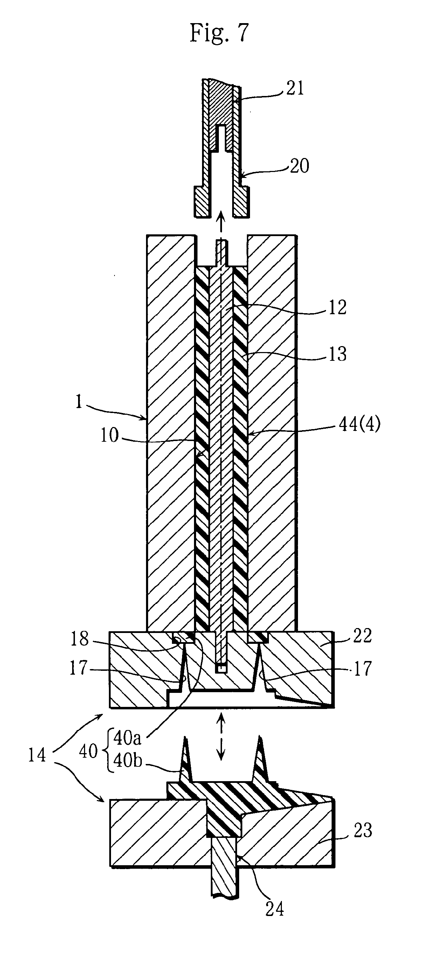

In Figure 7 through Figure 10, the drawing process, in which the resin roller 4 (the resin molded product 44) solidified in the mold 1 is drawn out of the mold 1, is described.

In Figure 7, the resin layer 13 is completely solidified, and the resin roller 4 (the resin molded product 44) is departed from the inner face 10 of the mold 1 (refer to Figure 6). In this state, the resistance-adding means 20 and the supporting arm 21 are parted upward from the upper end of the resin roller 4 (the resin molded product 44). And, when the upper main body 22 and the lower main body 23 of the molten resin supplying duct main body 14 are parted in vertical direction, a waste resin portion 40 under the resin roller 4 (the resin molded product 44) is divided into two parts at the position of the end of the spool 17. A divided waste resin portion 40a remains in the resin well 18, and the other waste resin portion 40b sticks to the upper face of the lower main body 23.

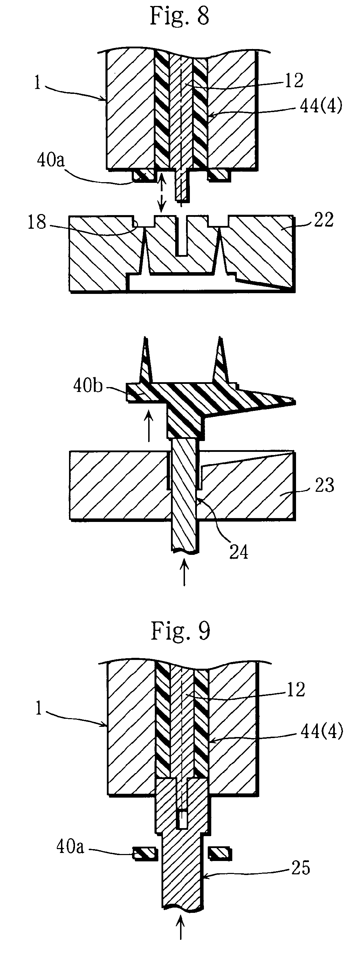

Next, in Figure 8, the mold 1 and the upper main body 22 are departed. and the waste resin portion 40a is drawn out of the resin well 18. And, the waste resin portion 40b sticking to the lower main body 23 is pushed upward and removed by an extraction rod 24 freely going through a vertical through hole of the lower main body 23.

And, the waste resin portion 40a on the lower part of the resin roller 4 (the resin molded product 44) is cut and removed by a cutting device 25 below as shown in Figure 9.

Then, as shown in Figure 10, the resin roller 4 (the resin molded product 44) is drawn out (pushed out) of the mold 1 by a drawing means 26 inserted to the cavity 2.

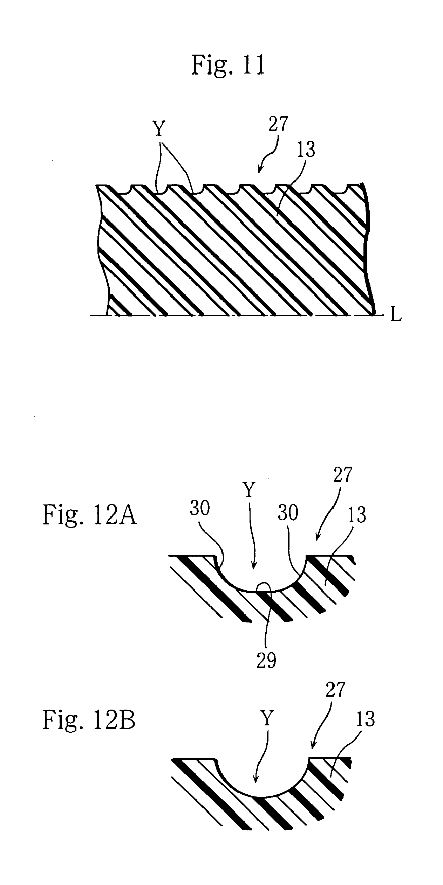

Figure 11 is an enlarged front view of the measuring roller 27 made by the drawing of the resin roller 4 out of the mold 1 as described above, and the concave pattern Y is formed on the surface of the resin layer 13 of the measuring roller 27.

The concave pattern Y of plural ridges is preferably disposed with inclination of 45 ° to a longitudinal line L parallel to an axis on the periphery of the measuring roller 27 and shown with a one-dot broken line. And, the concave pattern Y of single groove may be formed spiral, or, a multi-groove concave pattern Y may be formed spiral as a whole. And, plural concave patterns may be independently formed.

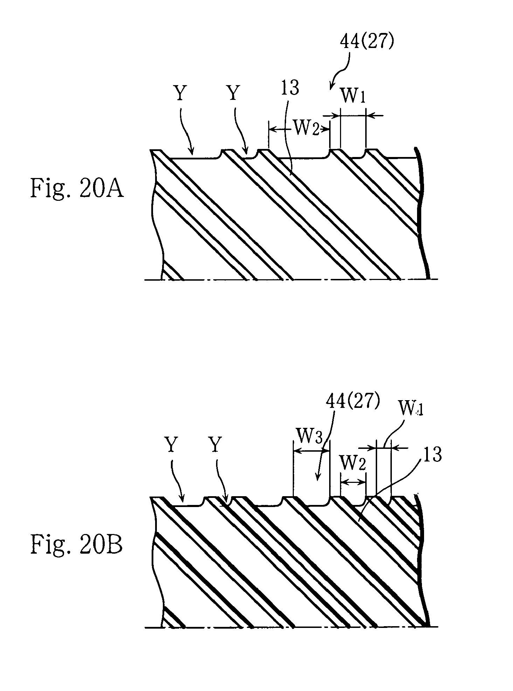

And, as shown in Figure 20A, as the resin molded product 44 (the measuring roller 27), independent grooves may be formed in the concave pattern Y, and width dimensions W₁ and W₂ of the grooves may be different. As shown in Figure 20B, width dimensions W₁, W₂ , and W₃ may be different one another. In this case, the multi-groove concave pattern Y may be formed spiral as a whole, or , plural concave grooves may be independently formed.

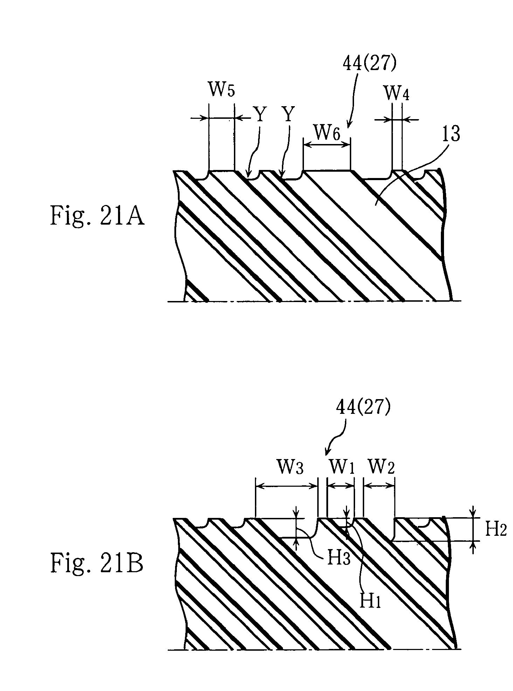

And, as shown in Figure 21A, width dimensions W₄, W₅, and W₆ of convex portions between the concave grooves may be different. Figure 21A shows a case that the width dimensions of the concave grooves are also different as in Figure 20A or Figure 20B. And, the width dimensions of the concave grooves may be the same while the width dimensions W₄, W₅, and W₆ of the convex portions are different (not shown in Figures).

And, as shown in Figure 21B, it is preferable to make depth dimensions H₁, H₂ , and H₃ of the concave grooves different while the width dimensions of the concave grooves are different or the same. And, it is also preferable to combine the construction in which the width dimensions W₄, W₅, and W₆ of the convex portions are different as in Figure 21A, and the construction in which the depth dimensions H₁, H₂ , and H₃ of the concave grooves are different (not shown in Figures).

And, as the cross-sectional configuration of the concave pattern Y, a half-ellipse having a straight bottom portion 29 and side wall portions 30 of concave curved face continuing from the bottom portion 29 as shown in Figure 12A, and an arc shown in Figure 12B, are preferable. In other words, configurations having bent corner portions such as rectangular and V-shaped cross section are not preferable as the cross-sectional configuration of the concave pattern Y because ink remains at the corner portions and can not be accurately measured.

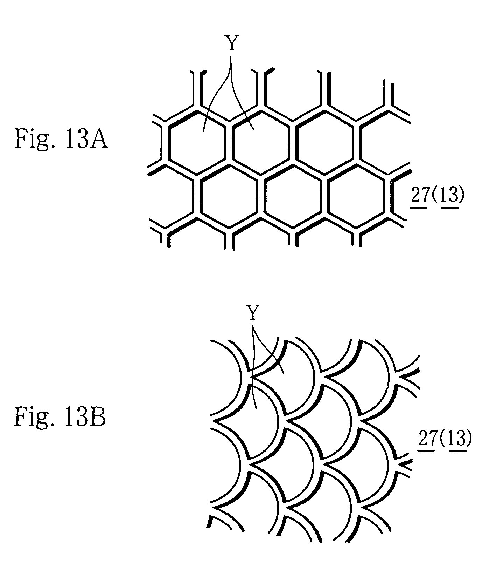

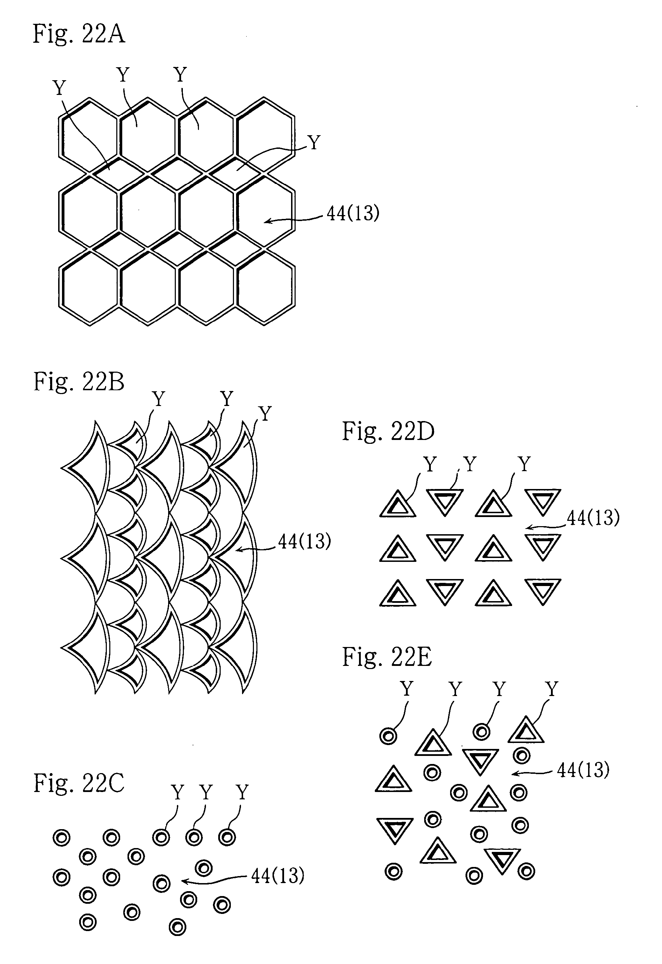

And, the concave pattern Y may be hexagonal honeycomb pattern shown in Figure 13A or fish-scale pattern shown in Figure 13B. As other configurations, various patterns, figures, or marks may be expressed as shown in Figures 22A through 22E. That is to say, a pattern, in which large hexagons are overlapped as in Figure 22A, and a pattern, in which large and small fish-scale figures are assorted, are possible. And, circular figures (marks) scattered as in Figure 22C, triangular figures (marks) disposed as in Figure 22D, and circular and trianglular figures (marks) mixed as in Figure 22E, are also preferable. Other than the above-mentioned patterns, figures, and marks, the concave pattern Y may be freely modified and letters may be expressed (not shown in Figures).

Although it is preferable to form the concave pattern Y uniformly on the whole face of the measuring roller 27 as the resin molded product 44, in the present invention, other than the measuring roller 27, the resin molded product 44 may be a plate cylinder used for flexography, gravure printing, and offset printing. In case that the resin molded product 44 is a plate cylinder, the concave pattern may be partially ununiform (not uniform on the whole face), may be formed into design patterns, or expressing letters, figures, and marks.

And, the core 12 may be made of metal or resin.

And, the manufacturing method for measuring roller of the present invention may be freely changed in design, and applicable to manufacturing method for resin roller having concavo-convex pattern on the surface not for printing machines.

In Figure 1. Figure 4, and Figure 7, the resistance-adding means 20 may be omitted, and, instead of the supporting arm 21, the upper end of the core 12 may be supported by a member as a lid to cover the upper end of the cavity 2 (not shown in Figures).

Next, a manufacturing method of the mold 1 is described.

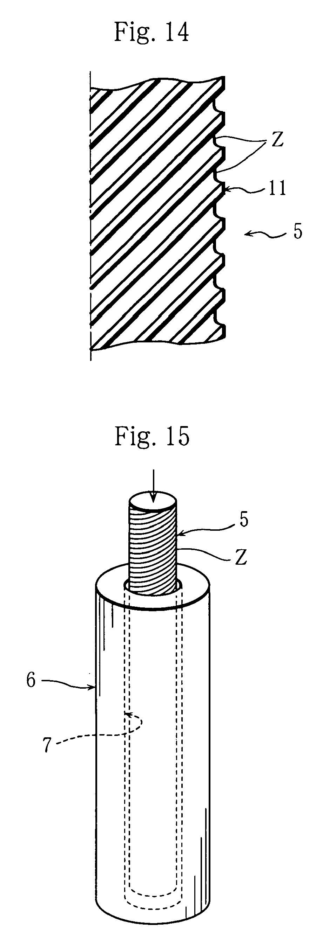

As shown in Figure 14, a concave pattern model Z is uniformly formed on the whole peripheral face of a metal round rod 11 of low fusion point (by mechanical cutting or laser machining) to make the master 5. In case of the concave pattern Y as shown in Figures 13A, 13B, and 22A through 22E, the concave pattern model Z is made as to correspond to the patterns, figures, or the marks. The metal round rod 11 is preferably made of easily workable soft metal such as aluminum, copper, and brass.

Then, as shown in Figure 15, the mold main body 6 of seamless and undivided configuration having the circular through hole 7 is prepared, the master 5 is inserted into the through hole 7, and the master 5 is centered and fixed within the through hole 7 by a jig not shown in Figures. The mold main body 6 is formed with a steel system material.

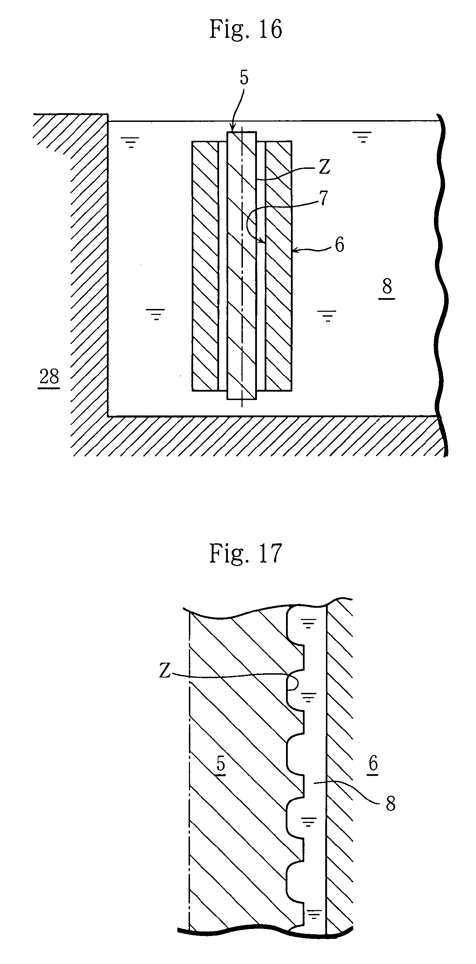

In Figure 16, a mark 28 represents a plating bath filled with plating liquid 8 (including nickel, etc.), the mold main body 6 to which the master 5 is inserted is immersed in the plating liquid. As shown in Figure 17, the plating liquid 8 intrudes and fills between the inner peripheral face of the mold main body 6 and the master 5.

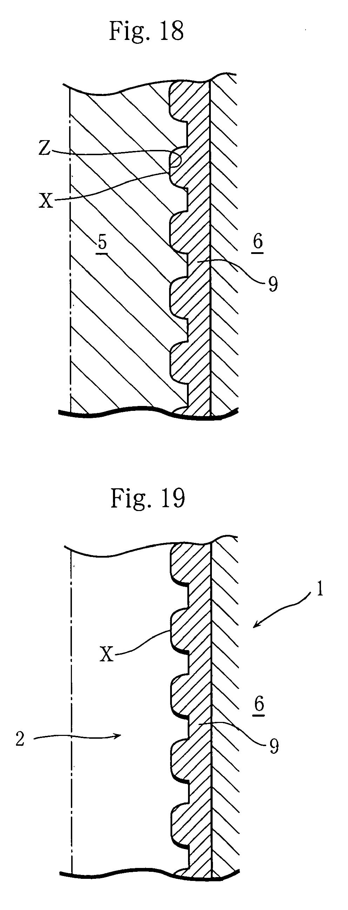

And, electric current runs between the inner peripheral face of the mold main body 6 and the master 5 to form a plated layer 9 shown in Figure 18. An outer face of the plated layer 9 sticks to the inner peripheral face of the mold main body 6, and the convex pattern X, transferred from the concave pattern model Z of the master 5, is formed on an inner face of the plated layer 9. As described above, the plated layer 9 having the convex pattern X is formed on the inner peripheral face of the mold main body 6 by electric casting.

Then, the mold main body 6 and the master 5 are taken out of the plating liquid 8. And, the master 5 is heated and fused to flow out of the through hole 7, and the convex pattern X is exposed to make the mold 1 (the cavity 2). It is preferable to set the length dimension of the resin molded product 44 to be 100mm to 500mm, especially, 150mm to 400mm. When the length dimension is less than the minimum value, characteristics of the electric casting of the present invention is not sufficiently shown because the mold main body can be made by conventional electric discharge machining. On the contrary, when the length dimension is more than the maximum value, production cost rapidly increases. In the present invention, the length dimension is a length from which the core 12 is removed, namely, the length of the resin layer 13.

The configuration of the concave pattern model Z of the master 5 is preferably half ellipse or arc-shaped (refer to Figures 12A and 12B). In other words, a configuration having bent corner portions such as rectangular and V-shaped is not preferable because it is difficult to wo rk.

As described above. the manufacturing method for resin molded product of the present invention can easily conduct mass production of resin molded product such as a measuring roller having highly accurate concave pattern Y on the surface because the cavity 2 is formed with the convex pattern X formed by electric casting on the inner peripheral face of the seamless and undivided mold main body 6 having the circular through hole 7, the core 12 is inserted into the cavity 2, the molten resin 3 is injected into the cavity 2 to form the cylindrical resin molded product 44 having the concave pattern Y on the surface and the core 12 in the center, the resin molded product 44 is departed from the inner face 10 of the cavity 2 by reduction of the outer diameter dimension φd along with cooling shrinkage of the molten metal 3, and the resin molded product 44 is drawn out of the cavity 2.

The concave pattern Y can be formed with high accuracy without generating a parting line on the surface of the measuring roller because the mold 1 (the mold main body 6) is seamless and undivided. And, the resin molded product 44 can be easily drawn out of the cavity 2 of the mold 1, and the concave pattern Y is not damaged in the drawing process because the resin molded product 44 is departed from the inner face 10 of the cavity 2 by reduction of the outer diameter dimension φ d along with the cooling shrinkage of the molten metal 3.

And, although it is difficult to form fine concaves and convexes (the convex pattern X) on an inner peripheral face of a seamless and undivided cylindrical body by conventional mechanical cutting and laser machining, the convex pattern X can be easily formed with high accuracy on the inner peripheral face of the mold main body 6 by electric casting in the present invention.

And, the resin molded product 44 is prevented from contacting the inner face of the cavity 2 of the mold 1 (refer to the marks 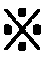 in Figure 23B) in drawing process, and smoothly drawn out without stress because the inner diameter dimension φD of the cavity 2 and the outer diameter dimension φd of the resin molded product 44 after the cooling shrinkage fulfill the relational expression (φD - φd)≧ 0.10mm. As described above, the method of the present invention, with which the concave pattern Y of accurate depth dimension and configuration can be formed on the surface, is appropriate for the resin measuring roller 27.

And, the convex pattern X can be easily formed with high accuracy on the inner peripheral face of the seamless and undivided mold main body 6 because the concave pattern model Z is formed on the peripheral face of the metal round rod 11 of low fusion point to make the master 5, the master 5 is inserted into the through hole 7 of the mold main body 6, plating liquid 8 fills between the inner peripheral face of the mold main body 6 and the master 5, the plated layer 9, having the convex pattern X transferred from the concave pattern model Z and sticking to the inner peripheral face of the mold main body 6, is formed between the inner peripheral face of the mold main body 6 and the master 5, the master 5 is fused and removed, and the convex pattern X is exposed to form the cavity 2.

That is to say, it is difficult to form fine concaves and convexes (the convex pattern X) on an inner peripheral face of a seamless and undivided cylindrical body by conventional mechanical cutting and laser machining. On the contrary, in the present invention, the master 5 can be easily made because the concave pattern model Z is formed on the peripheral face of the metal round rod 11 by mechanical cutting or laser machining. Then, the convex pattern X can be formed on the inner face of the plated layer 9 with high accuracy because the concave pattern model Z on the master 5 is transferred to the plated layer 9 by electric casting. As described above, the undivided mold 1 having the convex pattern X on the inner face 10 can be easily produced with high accuracy.

The method of the present invention is especially appropriate for a measuring roller because the convex pattern X is uniformly formed on the whole inner peripheral face of the mold main body 6. And, the convex pattern X can also be uniformly formed on the whole face because the concave pattern model Z is uniformly formed on the whole peripheral face of the metal round rod 11. And, the characteristic of the present invention that obtains the concave pattern Y of accurate configuration and dimensions is shown to the highest when the resin molded product 44 is the measuring roller 27. And, the convex pattern X expressing various designs, letters, figures, and marks, is widely applicable to plate cylinders for flexography (letterpress printing) and gravure printing (recessed plate printing) economically.

And, the advantage of the electric casting of the present invention is shown with the length dimension of the resin molded product 44 of 100mm to 500mm, which is impossible to achieve with conventional electric discharge machining, economically applicable to various rollers.

## Claims

1. A manufacturing method for resin molded product comprising the steps of :
forming a cavity (2) with a convex pattern (x) formed by electric casting on an inner peripheral face of a seamless and undivided mold main body (6) having a circular through hole (7);
inserting a core (12) into the cavity (2);
injecting molten resin (3) into the cavity (2) to form a cylindrical resin molded product (44) having a concave pattern (Y) on the surface and the core (12) in the center;
departing the resin molded product (44) from an inner face (10) of the cavity (2) by reduction of an outer diameter dimension (φd) along with cooling shrinkage of the molten metal (3); and
drawing the resin molded product (44) out of the cavity (2).

2. The manufacturing method for resin molded product as set forth in claim 1 wherein an inner diameter dimension of the cavity (2) is (φ D), and the outer diameter dimension of the resin molded product (44) after the cooling shrinkage is (φd), and a relational expression (φD - φd) ≧ 0.10mm is fulfilled.

3. The manufacturing method for resin molded product as set forth in claim 1 or claim 2, wherein a concave pattern model (Z) is formed on a peripheral face of a metal round rod (11) of low fusion point to make a master (5), the master (5) is inserted into the through hole (7) of the mold main body (6), plating liquid (8) fills between the inner peripheral face of the mold main body (6) and the master (5), a plated layer (9), having the convex pattern (X) transferred from the concave pattern model (Z) and sticking to the inner peripheral face of the mold main body (6), is formed between the inner peripheral face of the mold main body (6) and the master (5), the master (5) is fused and removed, and the convex pattern (X) is exposed to form the cavity (2).

4. The manufacturing method for resin molded product as set forth in claim 1 or claim 2, wherein the convex pattern (X) is uniformly formed on the whole inner peripheral face of the mold main body (6).

5. The manufacturing method for resin molded product as set forth in claim 3, wherein the concave pattern model (Z) is uniformly formed on the whole peripheral face of the metal round rod (11).

6. The manufacturing method for resin molded product as set forth in claim 1 or claim 2, wherein the resin molded product (44) is a measuring roller (27).

7. The manufacturing method for resin molded product as set forth in claim 1 or claim 2, wherein the convex pattern (X) expresses various designs, letters, figures, and marks.

8. The manufacturing method for resin molded product as set forth in claim 1 or claim 2, wherein the resin molded product (44) is a plate cylinder for printing.

9. The manufacturing method for resin molded product as set forth in claim 1 or claim 2, wherein a length dimension of the resin molded product (44) is 100mm to 500mm.
